# EUROPEAN PATENT APPLICATION

(11) **EP 1 422 457 A1**
(43) Date of publication of application: **26.05.2004**
(21) Application number: 03380251.3
(22) Date of filing: 31.10.2003
(51) Int. Cl.: F16L 3/12, F16L 3/13

(54) **Locking device for clamps for tubular pipes**

(30) Priority: 20.11.2002 ES 200202662
(71) Applicant: Isofix, S.L., 08192 Sant Quirze Del Valles (ES)
(72) Inventor: Yanguas Llobet, David, 08192 Sant Quirze del Valles (ES)
(74) Representative: SUGRANES - VERDONCES - FERREGÜELA

(57) **Abstract**

Clamps for tubular pipes, comprising a main body (1) equipped with a base (2), which joins the clamp to a surface; and with two arms (3,4) opposite one another, the aforementioned arms comprising complementary locking devices (6), configuring an interior space (5) in the clamp adapted to receive a tubular pipe (25). The complementary locking devices (6) are equipped with a cantilever catch (9), which prevents them from coming disengaged once they have fitted entirely into one another, so that it is only possible to open them through the external use of a tool.

## Description

### Technical field of the invention

The invention regards locking devices for clamps which are particularly applicable for the fixing of tubular pipes to the wall, such as the pipes used for the installation of central heating systems or bathroom fittings and, generally, any type of pipe for the transportation of fluids. Said clamps for tubular pipes consist of a main body, equipped with a base which joins the clamp to a surface; and equipped with two opposing arms which contain complementary locking devices, so that an interior space is defined in the clamp, adapted to receive and fix the tubular pipe into place.

### Background of the invention

There are numerous well-known embodiments of the kind of clamps which contain a cover and, more particularly, of clamps with covers for the fixing of tubular pipes to walls, ceilings or any other surface.

At present, different embodiments exist of clamps wherein the cover is permanently fixed to the main body, at one of the ends or at both by means of extensions.

The majority of the clamps of the kind disclosed above have the drawback that the cover they include is only able to mechanically hook into a locking tooth arranged on the upper end of the other arm, meaning that they are joined at one place only, without any kind of lock which guarantees that the clamp will not accidentally disengage without this hindering its possible subsequent dismantling. In fact, the majority of the clamps on the market are easily opened by minimum pressure exerted by an operator.

### Explanation of the invention

With the aim of providing a solution to said problem, derived from the lack of security means in the locking devices of clamps, a locking device with a new structure has been created for clamps, which complies with all the requirements of the technological performance in order to enable all the functions disclosed above.

The locking device for clamps for tubular pipes object of the invention, is characterized in that it consists of complementary locking devices equipped with a cantilever catch which prevents the clamps becoming disengaged once they have fitted entirely into one another, so that the only possible way of opening them is through the external action of a tool.

According to another characteristic of the invention, the complementary locking devices are equipped with two toothed elements, arranged at the ends of the respective arms and adapted to gradually fit into one another, with their toothed parts opposing and adjacent.

The locking device for clamps for tubular pipes object of the invention, is characterized in that the complementary locking devices consist of two complementary grip mechanisms, arranged so that each one of them consists of different parallel toothed elements, arranged on an arm of the clamp, and respectively overlapping with the corresponding elements arranged on the other arm of the clamp.

### Brief description of the drawings

An unrestrictive example of the embodiment of the clamp for tubular pipes, object of this invention, is presented in the drawings attached. In these drawings;
Fig.1 is a view of the front perspective view of a clamp with the locking device according to this invention, in a closed position;
Fig. 2 is another view of the front perspective view of a clamp with the locking device according to this invention, in an open position; and
Figs. 3 and 4 show the functioning of the secure and automatic locking of a clamp equipped with the object of the invention.

### Detailed description of the drawings

In these drawings, one can see the different parts which make up a clamp and its functioning in detail and, more particularly, those of a clamp according to the invention.

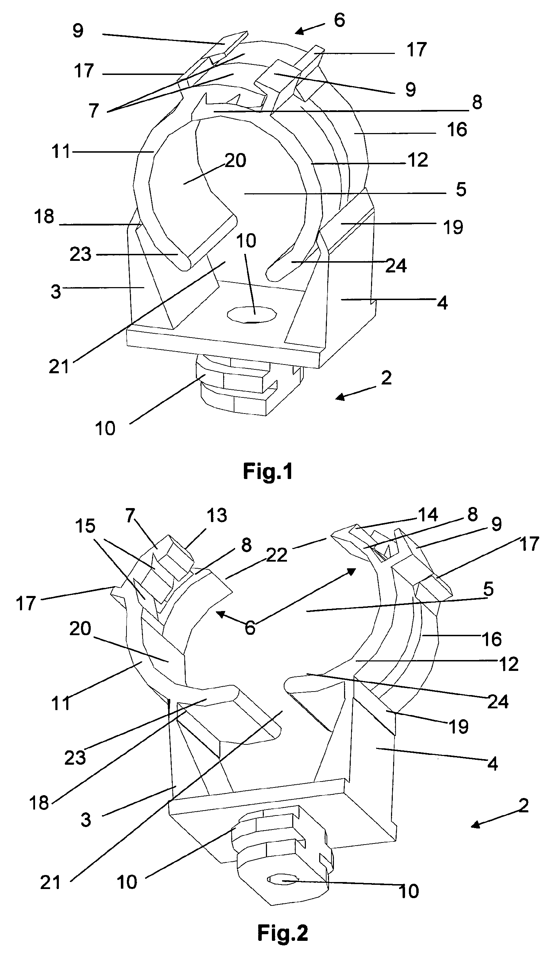

As one can see in Figs. 1 to 4, a clamp equipped with the object of the invention, consists of a main body 1 provided with a base 2; and two arms 3 and 4, which together configure an interior space 5 adapted to receive a tubular pipe 25. Said main body 1 also consists of locking devices 6 to secure the position of the tubular pipes.

The complementary locking devices 6, consisting of a grip mechanism, are equipped with two elements 7 and 8 situated at the respective upper ends of extensions 11 and 12 of the arms 3 and 4, and complementarily engage with one another by means of a toothed system. Element 7, is narrower and is slightly sloped at its free end 13, in order to facilitate the locking and reduce the force necessary in order to get past element 8, which consist of a tooth 14, complementary to the slots 15, which fit into element 8 when the two extensions 11 and 12 are in a closed position.

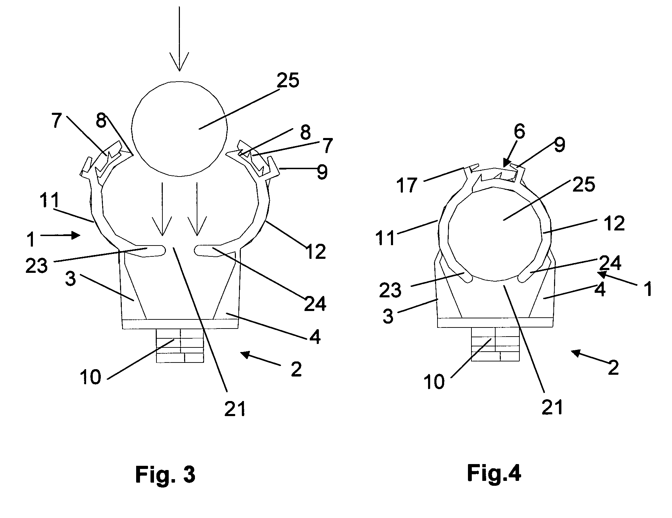

A cantilever catch 9 arranged on element 8 which goes under element 7, prevents the free end 13 of element 7 from disengaging upwards once fitted together, as one can see in Figs. 1 and 4, the only way of opening it thus being by means of the external action of a tool, such as a screwdriver.

One can see from the examples that the exterior surface 16 of the extensions 11 and 12 presents a rib 17 which is adapted to facilitate, where appropriate, the manual locking of the clamp.

In a preferred embodiment, and as shown in the figures, extensions 11 and 12, joint to the respective arms 3 and 4 by means of hinges 18 and 19, together configure an interior space 5 essentially circumferential, defined by a curved surface 20 interrupted by an intermediary transition area 21 between extensions 11 and 12, which is rectangular-shaped and extends towards base 2 of the clamp. This provides very good access to the means of fixing 10 of the clamp, and these means of fixing 10 could be the means of fitting into guides; threaded holes adapted to receive screws, nails, etc.

In all the cases represented, the complementary locking devices 6 consist of two complementary grip mechanisms, arranged so that extension 11 consists of both parallel toothed elements 7 and 8, and respectively overlapping with the corresponding elements 8 and 7 arranged on extension 12, so that each element 7 of one of the extensions, is complementary to element 8 of the other extension.

The arrangement of the catch 9, together with the structuring of the complementary locking devices 6, consisting of two locking devices with overlapping elements, together with the ribs 17, prevent the lateral displacement of the extensions 11 and 12 of the clamp, ensuring, in this way, that the clamp is locked.

In the example of the embodiment shown, the upper ends of the curved extensions 11 and 12 are distanced from one another, determining an entrance width 22, and in the lower end they are each equipped with respective prolongations 23 and 24, towards the interior space determined by arms 3 and 4, creating the separation space 21 between both, all of this arranged so that, when a tubular formation 25 is introduced into the interior space configured by extensions 11 and 12 through the entrance 22, said tubular formation 25 moves the prolongations 23 and 24 of the extensions 11 and 12, resulting in their upper ends meeting and hooking into one another through the complementary locking devices 6 arranged in their respective upper ends, causing the automatic locking of the clamp, all of this as illustrated in Figs. 3 and 4.

With great difficulty would a clamp with said characteristics open as a result of simple compression or lateral displacement, or manipulation by an operator, unless the latter uses an element which can be inserted in the space situated between the cantilever catch 9, and is able to exert the pressure required in order to deform it. So that a clamp according to the invention, constitutes an element to secure the fixing of tubular pipes 25 to any kind of surface.

Naturally, this technical solution to ensure the locking of clamps, can be applied to clamps of different sizes and shapes, such as clamps made of flexible materials, clamps with an asymmetric locking device, or with a different number of slots on elements 7 and 8, which configure the complementary locking devices 6, or clamps with various means of fixing or types of bases without, due to this, departing from the object of this invention.

## Claims

1. Locking device for clamps for tubular pipes, of those comprising a main body (1) equipped with a base (2), which joins the clamp to a surface; of two arms (3, 4) which configure an interior space (5) adapted to receive a tubular pipe (25); and of complementary locking devices (6), **characterized in that** the complementary locking devices are equipped with a cantilever catch (9) which prevents them from becoming disengaged once they have fitted entirely into one another, so that it is only possible to open them through the external use of a tool.

2. Locking device according to claim 1, **characterized in that** the complementary locking devices (6) are equipped with two toothed elements (7, 8), arranged at the end of the respective arms (3, 4) and adapted to gradually fit into one another, with their toothed parts opposing and adjacent.

3. Locking device according to claims 1 and 2, **characterized in that** the complementary locking devices (6) consist of two additional grip mechanisms, arranged so that each one of them consists of both parallel toothed elements (7) and (8), arranged on one of the arms (3) of the clamp, and respectively overlapping with corresponding elements (8) and (7) arranged on the other arm (4).
